# EUROPÄISCHE PATENTSCHRIFT

(11) **EP 3 348 707 B1**
(45) Veröffentlichungstag und Bekanntmachung des Hinweises auf die Patenterteilung: **10.03.2021**
(21) Anmeldenummer: 18000001.0
(22) Anmeldetag: 02.01.2018
(51) Int. Cl.: D06F 67/04

(54) **VERFAHREN UND VORRICHTUNG ZUM TRANSPORT UND/ODER AUSBREITEN VON AN KLAMMERN HÄNGENDEN WÄSCHESTÜCKEN**
METHOD AND DEVICE FOR TRANSPORTING AND/OR SPREADING OF LAUNDRY SUSPENDED ON CLAMPS
PROCÉDÉ ET DISPOSITIF DE TRANSPORT ET/OU D'ÉTALAGE DE LINGE ACCROCHÉ AU MOYEN DE PINCES À LINGE

(30) Priorität: 12.01.2017 DE 102017000171
(43) Veröffentlichungstag der Anmeldung: 18.07.2018
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A1- 0 573 810
- WO-A2-2005/038121
- JP-A- 2011 036 312
- US-A1- 2008 295 367

## Beschreibung

Die Erfindung betrifft ein Verfahren zum Transport und/oder Ausbreiten von an Klammern hängenden Wäschestücken gemäß dem Oberbegriff des Anspruchs 1. Die Erfindung betrifft des Weiteren eine Vorrichtung zum Transport und/oder Ausbreiten von an Klammern hängenden Wäschestücken gemäß dem Oberbegriff des Anspruchs 6.

Wäschestücke werden vor allem in gewerblichen Wäschereichen im an Klammern hängenden Zustand transportiert und/oder ausgebreitet. Die Klammern sind Bestandteil eines Förderers oder einer Wäschebehandlungsmaschine. Von Antriebsmitteln des Förderers werden die Klammern mit den daran hängenden Wäschestücken entlang einer entsprechenden Förderstrecke transportiert und/oder ausgebreitet.

Ein Bereich, vielfach ein Eckbereich, des jeweiligen Wäschestücks wird vor Beginn des Transports oder des Ausbreitens in die jeweilige ein oder auch mehrere Klammermäuler aufweisende Klammer eingegeben bzw. eingeführt. Das kann manuell oder maschinell geschehen.

Beim aus der US 2008/0295367 A1 bekannten Verfahren und Vorrichtung kommt es vor, dass der betreffende Bereich des Wäschestücks nicht richtig bzw. vollständig in die Klammer eingehängt ist. Dadurch besteht die Gefahr, dass sich das Wäschestück während des Transports oder des Ausbreitens von der Klammer unbeabsichtigt löst, was zu Problemen im Arbeitsablauf führen kann. Deswegen ist es aus der EP 0 573 810 A1 schon bekannt, Detektionsmittel vorzusehen, die den Beladevorgang der jeweiligen Klammer überwachen sollen. Solche Detektionsmittel müssen so positioniert sein, dass sie von der jeweils zu beladenden Klammer nicht beeinflusst werden. Das beeinträchtigt die Möglichkeiten der Gestaltung und Orientierung der Klammern. Außerdem stellt das Detektionsmittel das Wäschestück schon vor dem Einhängen desselben in die Klammer fest, wodurch es vorkommen kann, dass die jeweilige Klammer schon losfährt, bevor das Wäschestück auch tatsächlich in die Klammer eingehängt worden ist.

Der Erfindung liegt die Aufgabe zugrunde, ein Verfahren und eine Vorrichtung zu schaffen, die zuverlässig ohne Beeinflussung durch die Klammer sicherstellen, dass ein jeweiliges Wäschestück in die vorgesehene Klammer des Förderers ordnungsgemäß, insbesondere vollständig, eingeschoben ist, bevor die Klammer in Bewegung gesetzt wird.

Ein Verfahren zur Lösung dieser Aufgabe weist die Maßnahmen des Anspruchs 1 auf. Demnach wird der in die jeweilige Klammer einzugebende Bereich des Wäschestücks direkt ermittelt, indem eine berührungslose Abtastung der mindestens einen Stelle des in der Klammer gehaltenen Bereichs des Wäschestücks durch wenigstens einen Durchbruch in Gestalt eines Fensters der Klammer hindurch erfolgt. Es wird dadurch das Vorhandensein des Wäschestücks, das heißt desjenigen Bereichs des Wäschestücks, der von der Klammer festgehalten werden soll, in der Klammer unmittelbar überwacht. Vorzugsweise erfolgt diese Feststellung erst, wenn sich der betreffende Bereich des Wäschestücks in ausreichendem Maße in der Klammer befindet und/oder so in die Klammer eingegeben ist, wie es vorgesehen und/oder notwendig ist. In der Regel ist das der Fall, wenn der in die Klammer einzugebende Bereich des Wäschestücks sich ganz in der Klammer befindet. Durch die direkte Überwachung des in die jeweilige Klammer einzugebenden Bereichs des Wäschestücks wird sichergestellt, dass das Wäschestück in die Klammer eingegeben ist und sich insbesondere auch richtig in der Klammer befindet, bevor der Weitertransport der betreffenden Klammer beginnt.

Erfindungsgemäß ist es vorgesehen, durch Detektion mindestens einer Stelle des in die Klammer einzugebenden bzw. eingegebenen Bereichs des Wäschestücks direkt festzustellen, ob sich der betreffende Bereich des Wäschestücks in der Klammer befindet, insbesondere richtig in der Klammer befindet. Es kann so detektiert werden, ob die Klammer bereit und in der Lage ist, das Wäschestücke weiterzutransportieren und/oder auszubreiten. Vor allem wird so zuverlässig vermieden, dass die Klammer weiterfährt, bevor das Wäschestück in die Klammer eingehängt ist, vor allem ausreichend tief in die Klammer gesteckt worden ist.

Besonders vorteilhaft ist es, wenn durch die berührungslose Abtastung des in die Klammer eingegebenen bzw. einzugebenden Bereichs des Wäschestücks festgestellt wird, ob dieser Bereich des Wäschestücks sich vorzugsweise ganz in mindestens einem Klammermaul der Klammer befindet. Dadurch lässt sich direkt feststellen, ob das Wäschestück für den nachfolgenden Transport ausreichend sicher in der Klammer gehalten ist.

Es ist bei Klammern mit mehreren nebeneinanderliegenden Klammermäulern, die zur gemeinsamen Aufnahme des in die Klammer einzugebenden Bereichs des Wäschestücks dienen, vorgesehen, den zwischen benachbarten Klammermäulern sich befindenden Bereich, insbesondere einen Eckbereich, des Wäschestücks berührungslos abzutasten. Zwischen den Klammermäulern kann der betreffende Bereich, vorzugsweise eine signifikante Stelle desselben, besonders leicht eindeutig direkt ermittelt bzw. gemessen werden und die Stelle als Indikator für eine korrekte Beladung der Klammer, die bei mehreren Klammermäulern auch als Mehrfachklammer oder Doppelklammer bezeichnet werden kann, herangezogen werden.

Bei einer bevorzugten Ausgestaltung des Verfahrens ist es vorgesehen, dass der in der jeweiligen Klammer gehaltene Bereich des Wäschestücks durch eine berührungslose, optische und/oder akustische Abtastung, mindestens an einer Stelle des in der Klammer gehaltenen Bereichs des Wäschestücks , direkt festgestellt wird.

Eine solche Detektion lässt sich besonders einfach in das Verfahren implementieren. Sie behindert das Verfahren nicht und ist störunanfällig.

Bevorzugt erfolgt die berührungslose Abtastung der mindestens einen Stelle des in der Klammer gehaltenen Bereichs des Wäschestücks durch Reflexion von Licht und/oder Schallwellen bzw. Schallimpulsen. Eine solche Abtastung lässt sich ohne mechanische Mittel realisieren und kann deshalb besonders vorteilhaft direkt erfolgen.

Der Durchbruch in Gestalt eines Fensters befindet sich bevorzugt in einem Gehäuse oder einer Basis der Klammer, und zwar insbesondere dort, wo die Klammer und das Gehäuse oder die Basis keine beweglichen Teile aufweisen. Durch den mindestens einen Durchbruch in Gestalt eines Fensters kann eine Signalbahn, auf der die berührungslose Abtastung der mindestens einen Stelle des Wäschestücks erfolgt, ungehindert hindurchtreten. Die zu detektierende Stelle des sich in der Klammer befindlichen Bereichs des Wäschestücks kann dadurch von der Signalbahn direkt erreicht werden bzw. ist unmittelbar von der Signalbahn zugänglich, ohne dass dabei irgendwelche Teile der Klammer, insbesondere des Gehäuses oder der Basis der Klammer, stören. So kann von der Signalbahn oder einem Messstab derselben auch eine solche Stelle detektiert werden, die sonst nicht zugänglich wäre. Insbesondere ist so von der Signalbahn eine innenliegende Stelle des in der Klammer gehaltenen und vorzugsweise freiliegenden Bereichs des Wäschestücks direkt zugänglich, wodurch es möglich ist, eine signifikante Stelle des in der Klammer gehaltenen Bereichs des Wäschestücks direkt insbesondere berührungslos zu ermitteln.

Eine Vorrichtung zur Lösung der eingangs genannten Aufgabe weist die Merkmale des Anspruchs 6 auf. Demnach ist eine Detektionseinrichtung vorgesehen, die das Vorhandensein des vorgesehenen Bereichs des Wäschestücks in der Klammer direkt ermittelt, wobei in der jeweiligen Klammer wenigstens ein Durchbruch in Gestalt eines Fensters zum Durchtritt der mindestens einen Signalbahn des Detektionsmittels bzw. der Detektionseinrichtung vorgesehen ist. Dadurch können die Signale der Detektionseinrichtung ungehindert an die direkt zu detektierende Stelle des in die betreffende Klammer einzuschiebenden Bereichs des Wäschestücks gelangen. Es wird demnach anders als bisher der in die Klammer einzuschiebende Bereich des Wäschestücks nicht vor der Eingabe ermittelt, sondern später, und zwar vorzugsweise erst dann, wenn sich der Bereich auch in der Klammer befindet und/oder die Eingabe abgeschlossen ist. Dadurch werden falsche Informationen und daraus resultierende Betriebsstörungen zuverlässig vermieden.

Bevorzugt ist die mindestens einen Detektionseinrichtung zur Erzeugung wenigstens einer optischen oder akustischen Signalbahn und/oder eines solchen Signalstrahls ausgebildet.

Es kann vorgesehen sein, die Signalbahn direkt auf eine Stelle des in der Klammer sich befindenden Bereichs des Wäschestücks zu richten. Durch eine solche Ausgestaltung der Detektionseinrichtung lässt sich der in die Klammer eingegebene Bereich des Wäschestücks besonders vorteilhaft direkt ermitteln bzw. detektieren.

Gemäß einer bevorzugten Ausgestaltung der Vorrichtung ist die mindestens eine Detektionseinrichtung ortsfest am Förderer angeordnet. Vorzugsweise befindet sich die mindestens eine Detektionseinrichtung an einem feststehenden und/oder unbeweglichen Teil des Förderers. Dadurch braucht die Detektionseinrichtung nicht mit der Klammer mitbewegt zu werden und vor allem reicht es, mindestens eine Detektionseinrichtung an der Beladestelle oder Übergabestelle des Wäschestücks von einer Klammer zur anderen vorzusehen. Die Detektion erfolgt beim Vorbeilaufen jeweils einer Klammer an der mindestens einen Detektionseinrichtung. Es arbeitet eine Detektionseinrichtung mit allen Klammern bzw. ausgewählten Klammern des Förderers zusammen. Dadurch erübrigt es sich, jeder Klammer eine eigene Detektionseinrichtung zuzuordnen. Außerdem ist die Datenübertragung von einer ortsfesten Detektionseinrichtung einfacher und störunanfälliger.

Vorzugsweise ist bei Klammern mit einem einzigen Klammermaul vorgesehen, das Vorhandensein des Bereichs des Wäschestücks im Klammermaul von der Detektionseinrichtung durch direkte Erfassung einer sich im Klammermaul befindlichen Stelle des Wäschestücks zu ermitteln. Es wird dann derjenige Zustand, in dem sich der in die Klammer eingegebene Bereich des Wäschestücks auch tatsächlich in der Klammer befindet, direkt ermittelt. Eine solche Detektion ist sehr zuverlässig.

Bei Klammern mit mindestens zwei mit Abstand nebeneinanderliegenden Klammermäulern, insbesondere sogenannte Mehrfach- oder Doppelklammern, ist es bevorzugt vorgesehen, von der mindestens einen Detektionseinrichtung einen Freiraum bzw. Innenraum zwischen zwei benachbarten Klammermäulern der Klammer zu betrachten oder detektieren zu lassen. Dadurch wird der in der jeweiligen Doppel- bzw. Mehrfachklammer zwischen benachbarten Klammermäulern liegende Bereich des Wäschestücks direkt ermittelt. Diese zwischen benachbarten Klammermäulern liegende Stelle des in die Klammer eingegebenen Bereichs des Wäschestücks liegt frei und ist deshalb besonders gut von Messsignalen der Detektionseinrichtung zugänglich. Störungen durch irgendwelche Teile der Klammer, insbesondere der Klammermäuler, können so vermieden werden.

Der jeweilige Durchbruch in Gestalt eines Fensters ist derart in der oder jeder Klammer angeordnet, dass die zu erfassende Stelle des Wäschestücks vom Detektionsmittel direkt zugänglich und detektierbar ist. Vorzugsweise ist es vorgesehen, den mindestens einen Durchbruch in Gestalt eines Fensters so in der jeweiligen Klammer anzuordnen, dass die Signalbahn und/oder die Signale des Detektionsmittels auf die vorgesehene Stelle des Wäschestücks auftreffen können, und zwar insbesondere zwischen zwei benachbarten Klammermäulern der jeweiligen Klammer. Dadurch ist eine hindernislos direkte Ermittlung einer signifikanten Stelle des in die Klammer eingegebenen Bereichs des Wäschestücks gewährleistet. Das vor allem dann, wenn die Eingabe des Wäschestücks in die Klammern abgeschlossen ist. So kann auch kontrolliert werden, ob der in die Klammer einzugebende Bereich des Wäschestücks sich an der richtigen Stelle in der Klammer befindet und/oder ausreichend weit in die Klammer eingeschoben ist.

Ein bevorzugtes Ausführungsbeispiel der Erfindung wird nachfolgend anhand der Zeichnung näher erläutert. In dieser zeigen:
- Fig. 1: eine schematische Seitenansicht der Vorrichtung vor einer Eingabemaschine,
- Fig. 2: eine Ansicht II der Vorrichtung der Fig. 1,
- Fig. 3: eine perspektivische Darstellung eines Teils der Vorrichtung mit einer vom Förderer weitertransportierbaren Klammer und einer Detektionseinrichtung,
- Fig. 4: die Ansicht der Fig. 3 mit einem in die Klammer eingegebenen Wäschestück,
- Fig. 5: eine Vorderansicht der Darstellung der Fig. 3,
- Fig. 6: die Darstellung der Fig. 5 mit einem in die Klammer eingegebenen Wäschestück, und
- Fig. 7: eine Seitenansicht der Vorrichtung gemäß der Darstellung der Fig. 3.

Die in den Figuren gezeigte Vorrichtung wird bevorzugt in gewerblichen Wäschereien eingesetzt. Die Vorrichtung dient dazu, Wäschestücke 10 an einer Klammer 11 hängend weiterzutransportieren.

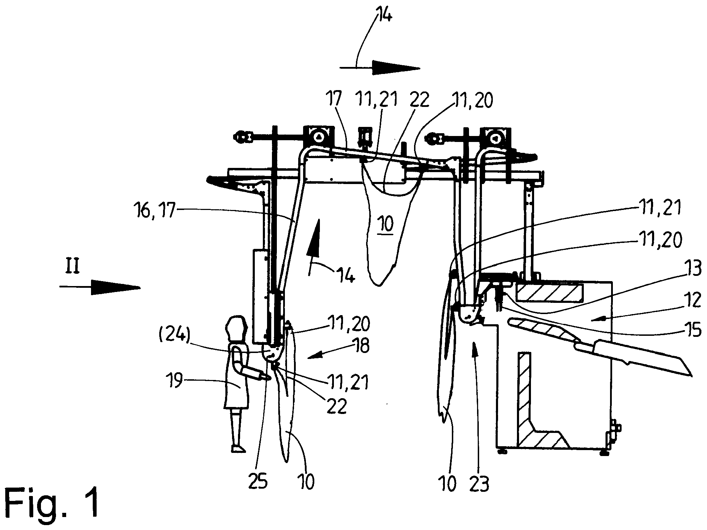

Die Fig. 1 zeigt die Vorrichtung vor einer sogenannten Eingabemaschine 12 zum Ausbreiten des jeweiligen Wäschestücks 10 und Zuführen desselben im ausgebreiteten Zustand zu einer nachfolgenden Wäschebehandlungsmaschine, beispielsweise einer nicht gezeigten Muldenmangel. Zum Ausbreiten des jeweiligen Wäschestücks 10 verfügt die Eingabemaschine 12 über eine Spreizeinrichtung 13 mit quer zur Transportrichtung 14 verfahrbaren Spreizklammern 15.

Die im Ausführungsbeispiel der Fig. 1 vor der Eingabemaschine 12 angeordnete Vorrichtung weist einen Förderer 16 auf. Der Förderer 16 verfügt über eine den Transportweg vorgebende Schiene 17, an der oder in der eine Mehrzahl mit Abstand aufeinander folgender und vorzugsweise gleicher Klammern 11 verfahrbar sind, beispielsweise durch die jeweilige Klammer 11 tragende Laufwagen. Mindestens abschnittsweise ist der Schiene 17 ein umlaufend angetriebener Transportstrang zugeordnet, von dem die Klammern 11 in Transportrichtung 14 längs der Schiene 17 oder mindestens bestimmter Abschnitte der Schiene 17 verfahrbar sind.

An einer Beladestation 18 des Förderers 16 gibt eine Bedienungsperson 19 jeweils ein einzelnes Wäschestück 10 in die Klammern 11 ein. Im gezeigten Ausführungsbeispiel wird dieses Wäschestück 10 mit zwei benachbarten Bereichen, und zwar bevorzugt gegenüberliegenden Eckbereichen 20, 21, eines von der Spreizeinrichtung 13 zu streckenden Randes 22 des Wäschestücks 10 nacheinander in zwei aufeinanderfolgende Klammern 11 eingehängt.

Die an den Klammern 11 hängenden Wäschestücke 10 werden dann entlang der Schiene 17 des Förderers 16 zur Eingabemaschine 12 transportiert. Dabei kann der Förderer 16 durch eine entsprechend lange Schiene 17 als Speicher bzw. Puffer für eine Vielzahl von Wäschestücken 10 dienen, die auf die Übergabe von den Klammern 11 in die Spreizklammern 15 der Eingabemaschine 12 warten. Die Übergabe der Eckbereiche 12 der Wäschestücke 10 von den Klammern 11 der Vorrichtung an die Spreizklammern 15 der Eingabemaschine 12 erfolgt vorzugsweise automatisch nacheinander. Dazu verfügt die Vorrichtung vor der Spreizeinrichtung 13 der Eingabemaschine 12 über eine entsprechende Entladestation 23.

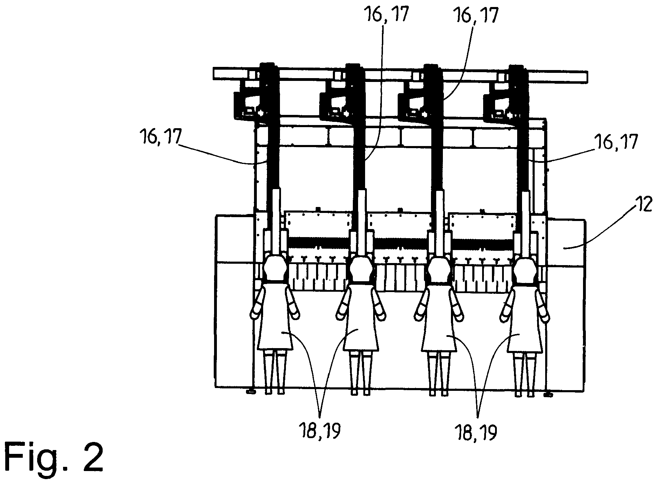

Aus der Fig. 2 geht hervor, dass im gezeigten Ausführungsbeispiel vier vorzugsweise gleiche Vorrichtungen parallel nebeneinander angeordnet sind und gleichzeitig unabhängig voneinander betrieben werden können. Demzufolge sind vier nebeneinanderliegende Beladestationen 18 vorgesehen mit jeweils einer Bedienungsperson 19. Die vier Vorrichtungen führen die Wäschestücke 10 einer gemeinsamen einzigen Eingabemaschine 12 zu. Das kann in einer mehrbahnigen, aber auch einbahnigen bzw. wechselweise ein- und mehrbahnigen Betriebsweise der Eingabemaschine 12 erfolgen. Die Erfindung ist aber nicht auf vier nebeneinander angeordnete Vorrichtungen beschränkt. Es ist denkbar, dass eine größere oder kleinere Anzahl von Vorrichtungen vor der Eingabemaschine 12 angeordnet ist und gegebenenfalls auch nur eine einzige Vorrichtung.

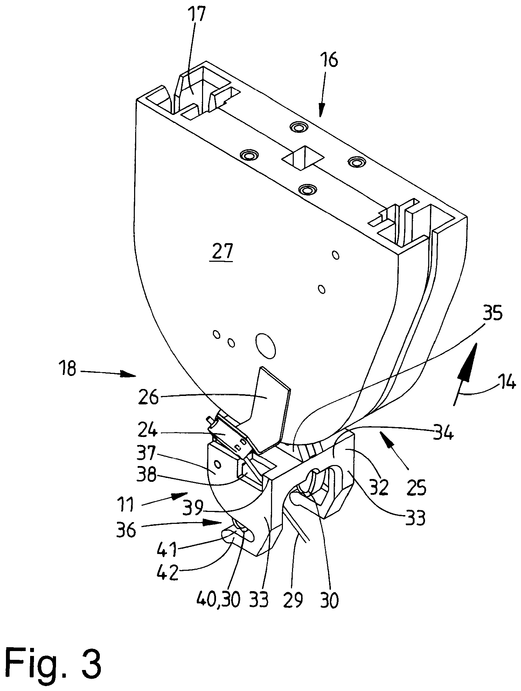

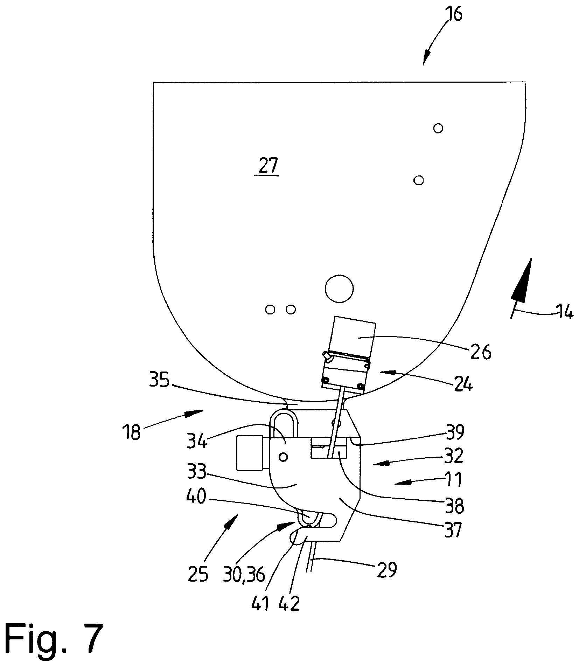

Die Fig. 3 bis 7 zeigen eine der gleichen Klammern 11 der Vorrichtung im Bereich einer Detektionseinrichtung 24. Während die Klammern 11 in Transportrichtung 14 längs der Schiene 17 des Förderers 16 bewegbar bzw. verfahrbar sind, ist die Detektionseinrichtung 24 ortsfest der jeweiligen Beladestation 18 zugeordnet. Die Detektionseinrichtung 24 befindet sich seitlich neben einer unteren, U-förmigen Umlenkstelle 25 der Schiene 17 des Förderers 16. Befestigt ist die Detektionseinrichtung 24 mit einem Haltewinkel 26 an einer im unteren Bereich halbkreisförmigen Seitenverkleidung 27 der Umlenkstelle 25.

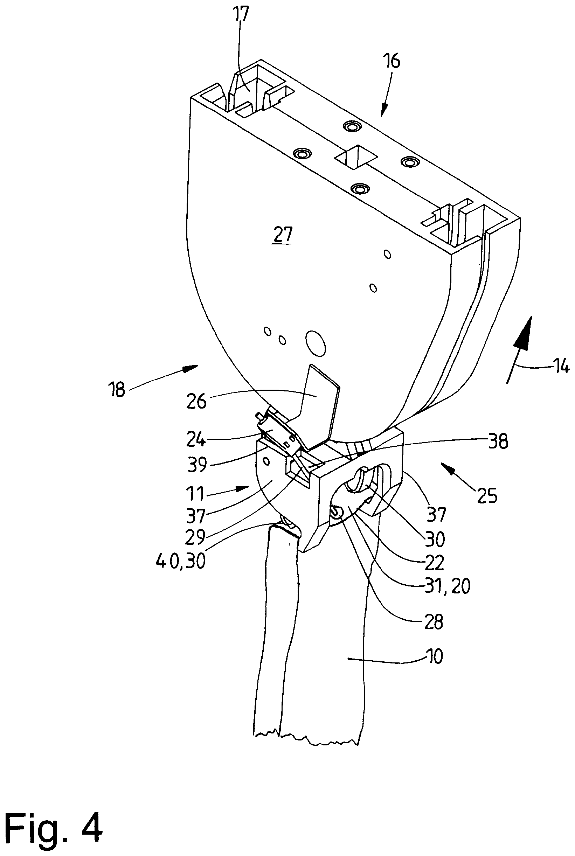

Bei der Detektionseinrichtung 24 handelt es sich um eine solche, die berührungslos eine symbolisch durch einen Kreis in der Fig. 4 dargestellte Stelle 28 eines in die Klammer 11 eingehängten Eckbereichs 20 bzw. 21 eines jeweiligen Wäschestücks 10 direkt ermittelt. Dies erfolgt bevorzugt durch eine berührungslose Abtastung der Stelle 28 des jeweiligen Eckbereichs 20, 21 des Wäschestücks 10 durch optische und/oder akustische Signale und/oder Wellen, beispielsweise Schallwellen, elektromagnetische Wellen oder Lichtwellen. Diese erzeugen eine Signalbahn 29, die im gezeigten Ausführungsbeispiel idealisiert als ein Strahl dargestellt ist, der unsichtbar sein kann. Bei dem Strahl kann es sich um einen ununterbrochenen Lichtstrahl, insbesondere Laserstrahl, handeln. Es ist auch denkbar, dass die Signalbahn 29 durch eine zeitlich regelmäßige oder unregelmäßige Aufeinanderfolge einzelner Signale oder Impulse gebildet ist.

Die jeweils zu beladende Klammer 11 wird an der Beladestation 18 in der definierten Position kurzzeitig angehalten, damit die Bedienungsperson 19 einen Eckbereich 20 bzw. 21 eines Wäschestücks 10 in die Klammer 11 eingeben kann. Auf diese Position abgestimmt ist die Detektionseinrichtung 24 an der Seitenverkleidung 27 der Beladestation 18 ortsunveränderlich befestigt. Die Detektionseinrichtung 24 kann deshalb immer dann, wenn sich eine Klammer 11 an der Beladestation 18 in der zum Beladen erforderlichen Ruhestellung befindet, direkt die vorgesehene Stelle 28 des Eckbereichs 20 bzw. 21 des in die Klammer 11 eingegebenen Wäschestücks 10 berührungslos abtasten.

Die Klammer 11 des hier gezeigten Ausführungsbeispiels der Vorrichtung ist als eine Doppelkammer mit zwei parallel nebeneinander angeordneten, gleichen Klammermäulern 30 ausgebildet. Der jeweilige Eckbereich 20, 21 eines Wäschestücks 10 wird beim Beladen gleichzeitig in beide Klammermäuler 30 eingeschoben. Dabei entstehen in einem Freiraum zwischen den geringfügig voneinander beabstandeten Klammermäulern 30 ein gestreckt gehaltener kurzer Abschnitt des Rands 22, insbesondere Vorderrands, des Wäschestücks 10 und ein sich daran anschließender schmaler Randstreifen des Eckbereichs 20 bzw. 21.

Die Stelle 28, die von der Detektionseinrichtung 24 direkt ermittelt wird, befindet sich auf dem schmalen, zwischen den Klammermäulern 30 der Klammer 11 gehaltenen Randstreifen 31 des Eckbereichs 20 bzw. 21 des Wäschestücks 10. Im gezeigten Ausführungsbeispiel ist die Stelle 28 etwas vom Rand 22 beabstandet. Gegebenenfalls kann von der Detektionseinrichtung 24 auch eine solche Stelle des Eckbereichs 20 bzw. 21 des Wäschestücks 11 direkt ermittelt werden, die auf dem Rand 22 liegt.

Die gezeigte, als Doppelklammer ausgebildete Klammer 11 verfügt über eine Basis 32, die in Einschubrichtung des Wäschestücks 10 in die Klammermäuler 30 gesehen etwa U-förmig ausgebildet ist, insbesondere nach Art eines U-Profils. Dazu verfügt die Basis 32 über zwei parallele und voneinander etwas beabstandete vertikale und gleich ausgebildete Schenkel 33 mit jeweils einem Klammermaul 30 und einem die oberen Enden der beiden Schenkel 33 verbindenden horizontalen Steg 34. Eine Oberseite des Stegs 34 weist ein Anschlussstück 35 zur Verbindung der Basis 32 der Klammer 11 mit jeweils einem in der Schiene 17 des Förderers 16 laufenden Laufwagen auf.

Die Basis 32 der Klammern 11 ist einstückig ausgebildet, bevorzugt aus Kunststoff, so dass die Schenkel 33 und der Steg 34 zusammenhängen.

Die Klammermäuler 30 sind so in den beiden Schenkeln 33 angeordnet, dass ihre Einschuböffnungen 36 an der Beladestation 18 zur jeweiligen Bedienungsperson 19 gerichtet sind. Dabei verläuft die Einschubrichtung des jeweiligen Wäschestücks 10 in die Klammermäuler 30 vorzugsweise etwa oder annähernd parallel zur Transportrichtung 14 der Klammer 11.

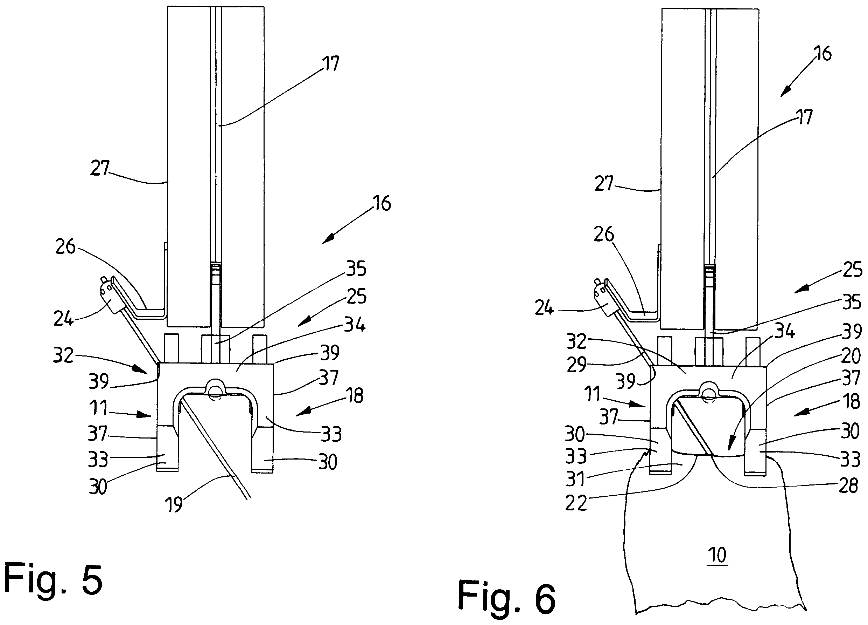

Die Schenkel 33 der Basis 32 der Klammer 11, insbesondere äußere vertikale Seitenflächen 37 der Schenkel 33, verlaufen parallel zur Seitenverkleidung 37 des Förderers 16 (Fig. 5 und 6).

Die Basis 32 jeder Klammer 11 verfügt über einen Durchbruch 38 für die Detektionseinrichtung 24, insbesondere ihre Signalbahn 29 (Fig. 4). Der Durchbruch ist an einer solchen Stelle der Basis 32 der Klammer 11 angeordnet, dass die Signalbahn 29 der Detektionseinrichtung 24 den Durchbruch 38 schneidet, wenn die Klammer 11 an der Beladestation 18 in der Beladestellung kurzzeitig stillgesetzt ist.

Im gezeigten Ausführungsbeispiel befindet sich der Durchbruch 38 an einer Ecke zwischen einem zur Detektionseinrichtung 24 weisenden Schenkel 33 und den daran angrenzenden Steg 34 der Basis 32 der Klammer 11. Dadurch entsteht ein rechtwinklig abgewinkelter Durchbruch 38, dessen obere Hälfte sich ausgehend vom Schenkel 33 im Steg 34 erstreckt und dessen untere Hälfte vom Steg 34 ausgehend sich im Schenkel 33 befindet. Jedes der beiden zusammenhängenden Teile des Durchbruchs 38 verfügt über eine rechteckige Grundfläche, wodurch zusammen beide Teile einen in eine gedachte Ebene projizierten rechteckigen oder quadratischen Durchbruch 38 ergeben.

Die Signalbahn 29 der Detektionseinrichtung 24 verläuft durch den Durchbruch 38 bzw. schneidet denselben unter einem Winkel zur Vertikalen zwischen 25° und 45°, vorzugsweise etwa 30° und 40°. Dadurch trifft die Signalbahn 29 auf die Stelle 28 des zwischen den Klammermäulern 30 liegenden Randbereichs 31 des Wäschestücks 10 etwa mittig zwischen den Klammermäulern 30 auf (Fig. 6). Die Richtung der Signalbahn 29 ist derart gewählt, dass diese mittig durch den Durchbruch 38 hindurch verläuft und dadurch eine horizontale Kante 39 zwischen dem zur Detektionseinrichtung 24 weisenden Schenkel 33 und dem Steg 34 der Basis 32 der Klammer 10 schneidet.

Die Klammermäuler 30 können in an sich bekannter Weise ausgebildet sein, indem sie jeweils eine im schließenden Sinne federvorgespannte Klemmzunge 40 aufweisen, die um eine vorzugsweise horizontale Drehachse schwenkbar im jeweiligen Schenkel 33 gelagert ist. Die Klemmzunge 40 klemmt den Randstreifen 31 des Wäschestücks 10 gegen eine horizontale oder leicht schräge Anlagefläche 41 einer fest am jeweiligen Schenkel 33 angeordneten bzw. ausgebildeten Klemmnase 42. Dadurch ist der in den Klammermäulern 30 festgeklemmte Randstreifen 31 des Wäschestücks 10 horizontal oder leicht schräg ausgerichtet, wodurch die Signalbahn 29 der Detektionseinrichtung 24 unter einem Winkel von 25° bis 45°, vorzugsweise 30°bis 40°, schräggerichtet auf die zu detektierende Stelle 28 des Randstreifens 31 trifft (Fig. 4 und 6).

Das erfindungsgemäße Verfahren wird nachfolgend anhand der zuvor beschriebenen Vorrichtung erläutert:
Von der Detektionseinrichtung 24 wird berührungslos die Stelle 28 des zwischen den Klammermäulern 30 der Klammer 11 freiliegend gehaltenen Randstreifens 31 des Wäschestücks 10 direkt ermittelt. Die Stelle 28 wird von der strahlartigen Signalbahn 29 der Detektionseinrichtung 24 direkt berührungslos abgetastet. Die Detektion der Stelle 28 erfolgt erst, wenn der Randstreifen 31 in den Klammermäulern 30 der Klammer 11 eingegeben und von den Klammermäulern 30 gehalten wird. Vorzugsweise wird erst dann die Stelle 28 des Randstreifens 31 des Wäschestücks 10 direkt berührungslos detektiert, wenn der Randstreifen 31 vollständig in die Klammern 11 eingegeben ist.

Die berührungslose Ermittlung der Stelle 28 des Wäschestücks 10 erfolgt bei einer in der Beladestation 18 momentan stillstehenden Klammer 11. Bevorzugt befindet sich die Klammer 11 dabei im Bereich der unteren Umlenkstelle 25 der Beladestation 18 des Förderers 16. Der Durchbruch 38 in der Klammer 11, insbesondere in der Basis 32 derselben, und die Detektionseinrichtung 24 sind derart positioniert, dass bei zur Beladung an der Beladestation 18 momentan gestoppter, also stillstehender, Klammer 11 die strahlartige Signalbahn 29 ungehindert durch den Durchbruch 38 in der Basis 32 der Klammer 11 hindurchtreten kann. Dabei kann die Signalbahn 29 in den sich im Inneren der Basis 32 befindenden und zwischen den beiden parallelen Schenkeln 33 der Basis 32 der Klammer 11 eingeschlossenen Zwischenraum gelangen und so direkt die Stelle 28 des Wäschestücks 10 ermitteln und/oder detektieren, sobald der Randstreifen 31 des Wäschestücks 10 in die beiden Klammermäuler 30 der Klammer 11 von der Bedienungsperson 19 eingeschoben ist. Vorzugsweise erfolgt diese direkte Detektion dann, insbesondere nur dann, wenn der Randstreifen 31 richtig und weit genug in die Klammermäuler 30 der Klammer 11 eingeschoben ist. Die direkte Detektion der Stelle 28 bedeutet dann, dass der Randstreifen 31 des Wäschestücks 10 nicht nur in die Klammermäuler 30 der Klammer 11 eingeschoben ist, sondern sich auch weit genug in Klammermäulern 30 der Klammer 11 befindet.

Die direkte Detektion der Stelle 28 des Randstreifens 31 des Wäschestücks 10 in der Klammer 11 erfolgt durch berührungsloses Abtasten der Stelle 28. Bei vorzugsweise akustisch oder optisch arbeitender Detektionseinrichtung 24 werden auf die Stelle 28 auftreffende akustische Signale auf der Signalbahn 29 oder optische Strahlen, beispielsweise Lichtstrahlen, Laserstrahlen oder dergleichen, an der Stelle 28 reflektiert. Die Signale oder der Strahl gelangen dann zurück an den Ausgangspunkt der Signalbahn 29, vorzugsweise einen Empfänger der Detektionseinrichtung 24. Dieser verarbeitet die empfangenen Signale und leitet diese an eine Steuerung weiter, die erst dann den Weitertransport der Klammer 11 von der Beladestation 18 startet, sobald die Detektionseinrichtung 24 festgestellt hat, dass die direkt zu ermittelnde Stelle 28 sich dort zwischen den Klammermäulern 30 der Klammer 11 befindet, wo sich der Randstreifen 31 bei in die Klammer 11 eingegebenem, insbesondere vollständig eingegebenen, Wäschestück 10 befinden soll.

Die von der Signalbahn 29 der Detektionseinrichtung 24 direkt zu ermittelnde Stelle 28 des Randstreifens 31 des Wäschestücks 10 kann sich direkt auf dem Rand 22, aber auch in einem bestimmten, vorgegebenen Abstand zum Rand 22 befinden. Vorzugsweise befindet sich die Stelle 28 außerdem zwischen den beiden Klammermäulern 30 bzw. dem die Klammermäuler 30 aufweisenden Schenkel 33 der Basis 32 der Klammer 11. Durch entsprechende Ausrichtung der Detektionseinrichtung 24, insbesondere der von dieser erzeugen Signalbahn 29, gelangt das auf die Stelle 28 auftreffende Ende der Signalbahn 29 direkt und ohne Beeinflussung durch die Klammer 11, insbesondere ihre Basis 32, zwischen den Schenkeln 33 auf die zu detektierende Stelle 28 des Randstreifens 31 zwischen den Klammermäulern 30 der Klammer 11.

Das vorstehend beschriebene Verfahren kann alternativ oder zusätzlich auch zum Einsatz kommen an der Entladestation 23 des Förderers 16, also dort, wo von der Klammer 11 des Förderers 16 die Eckbereiche 20, 21 und/oder der die Randstreifen 31 des Wäschestücks 10 vorzugsweise nacheinander an die Spreizklammer 15 der Spreizeinrichtung 13 der Eingabemaschine 12 maschinell und/oder automatisch übergeben werden.

**Bezugszeichenliste:**

| | | | |
|---|---|---|---|
| 10 | Wäschestück | 36 | Einschuböffnung |
| 11 | Klammer | 37 | Seitenfläche |
| 12 | Eingabemaschine | 38 | Durchbruch |
| 13 | Spreizeinrichtung | 39 | Kante |
| 14 | Transportrichtung | 40 | Klemmzunge |
| 15 | Spreizklammer | 41 | Anlagefläche |
| 16 | Förderer | 42 | Klemmnase |
| 17 | Schiene | | |
| 18 | Beladestation | | |
| 19 | Bedienungsperson | | |
| 20 | Eckbereich | | |
| 21 | Eckbereich | | |
| 22 | Rand | | |
| 23 | Entladestation | | |
| 24 | Detektionseinrichtung | | |
| 25 | Umlenkstelle | | |
| 26 | Haltewinkel | | |
| 27 | Seitenverkleidung | | |
| 28 | Stelle | | |
| 29 | Signalbahn | | |
| 30 | Klammermaul | | |
| 31 | Randstreifen | | |
| 32 | Basis | | |
| 33 | Schenkel | | |
| 34 | Steg | | |
| 35 | Anschlussstück | | |

## Patentansprüche

1. Verfahren zum Transport und/oder Ausbreiten von an Klammern hängenden Wäschestücken (10), wobei ein Bereich eines jeweiligen Wäschestücks (10) in eine Klammer (11) eingeführt und das Wäschestück (10) ermittelt wird, indem direkt durch Detektion mindestens einer Stelle (28) des in die Klammer (11) eingegebenen Bereichs ermittelt wird, ob sich in der jeweiligen Klammer (11) der in dieselbe einzuführende Bereich des Wäschestücks (10) befindet, **dadurch gekennzeichnet, dass** die direkte Ermittlung durch berührungslose Abtastung der mindestens einen Stelle (28) des in der jeweiligen Klammer (11) gehaltenen Bereichs des Wäschestücks (10) durch wenigstens einen Durchbruch (38) in Gestalt eines Fensters der Klammer (11) erfolgt.

2. Verfahren nach Anspruch 1, **dadurch gekennzeichnet, dass** durch die berührungslose Abtastung des in die Klammer (11) einzugebenden Bereichs des Wäschestücks (10) festgestellt wird, ob dieser Bereich des Wäschestücks (10) sich in der richtigen Position in der Klammer (11) befindet, vorzugsweise ausreichend weit in die Klammer (11) eingeführt worden ist.

3. Verfahren nach Anspruch 1 oder 2, **dadurch gekennzeichnet, dass** bei Klammern (11) mit mehreren nebeneinanderliegenden Klammermäulern (30), die zur gemeinsamen Aufnahme des in die Klammer (11) einzugebenden Bereichs des Wäschestücks (10) dienen, die zwischen zwei benachbarten Klammermäulern (30) gehaltene Stelle (28) des in die Klammer (11) einzugebenden Bereichs des Wäschestücks (10) berührungslos abgetastet wird.

4. Verfahren nach einem der vorhergehenden Ansprüche, **dadurch gekennzeichnet, dass** der in der Klammer (11) gehaltene Bereich des Wäschestücks (10) durch eine berührungslose optische und/oder akustische Abtastung der mindestens einen Stelle (28) des in die Klammer (11) einzugebenden Bereichs des Wäschestücks (10) direkt festgestellt wird.

5. Verfahren nach Anspruch 4, **dadurch gekennzeichnet, dass** die berührungslose Abtastung der mindestens einen Stelle (28) des in der jeweiligen Klammer (11) gehaltenen Bereichs des Wäschestücks (10) durch eine Reflexion von Licht und/oder Schall, insbesondere Lichtstrahlen und/oder Schallimpulse bzw. Schallsignale, erfolgt.

6. Vorrichtung zum Transport und/oder Ausbreiten von an Klammern (11) hängenden Wäschestücken (10), mit einem wenigstens eine zum Halten eines Bereichs eines Wäschestücks (10) dienende Klammer (11) an einem Förderer (16) zum Verfahren der mindestens einen Klammer (11) und mit mindestens einer das Vorhandensein des Wäschestücks (10) ermittelnden Detektionseinrichtung (24), wobei die Detektionseinrichtung (24) zur durch berührungslose Abtastung erfolgenden direkten Ermittlung des Vorhandenseins des Bereichs des Wäschestücks (10) in der Klammer (11) und zur Erzeugung wenigstens einer vorzugsweise optischen und/oder akustischen Signalbahn (29) ausgebildet ist, **dadurch gekennzeichnet, dass** die Klammern (11) mindestens einen Durchbruch (38) in Gestalt eines Fensters zum Durchtritt der wenigstens einen Signalbahn (29) der Detektionseinrichtung (24) aufweisen.

7. Vorrichtung nach Anspruch 6, **dadurch gekennzeichnet, dass** die Detektionseinrichtung (24) und/oder die mindestens eine optische und/oder akustische Signalbahn (29) der Detektionseinrichtung (24) direkt auf wenigstens eine Stelle (28) des in der Klammer (11) sich befindenden Bereichs des Wäschestücks (10) gerichtet ist.

8. Vorrichtung nach Anspruch 6 oder 7, **dadurch gekennzeichnet, dass** die Detektionseinrichtung (24) ortsfest am Förderer (16) angeordnet ist, vorzugsweise an einem feststehenden Teil des Förderers (16).

9. Vorrichtung nach einem der Ansprüche 6 bis 8, **dadurch gekennzeichnet, dass** die Klammer (11) ein vorzugsweise einziges Klammermaul (30) zum Greifen und/oder Halten des Bereichs des Wäschestücks (10) aufweist und das Vorhandensein des Bereichs des Wäschestücks (10) in diesem Klammermaul (30) von der Detektionseinrichtung (24) durch direkte berührungslose Ermittlung einer sich im Klammermaul (30) oder in der Nähe desselben befindenden Stelle (28) des in der Klammer (11) gehaltenen Bereichs des Wäschestücks (10) ermittelbar ist.

10. Vorrichtung nach einem der Ansprüche 6 bis 8, **dadurch gekennzeichnet, dass** die Klammer (11) mindestens zwei mit Abstand nebeneinanderliegende Klammermäuler (30) aufweist, insbesondere als Doppelklammer ausgebildet ist, wobei von der mindestens einen Detektionseinrichtung (24) eine zwischen den benachbarten Klammermäulern (30) sich befindende Stelle (28), insbesondere freie Stelle (28), des von den mindestens zwei Klammermäulern (30) gehaltenen Bereichs des Wäschestücks (10) direkt berührungslos abtastbar ist.

11. Vorrichtung nach einem der Ansprüche 6 bis 10, **dadurch gekennzeichnet, dass** der wenigstens eine Durchbruch (38) in Gestalt eines Fensters derart in der jeweiligen Klammer (11) angeordnet sind, dass die wenigstens eine zu erfassende Stelle (28) des Wäschestücks (10) von der Detektionseinrichtung (24) erfassbar ist, vorzugsweise die mindestens eine Signalbahn (29) der Detektionseinrichtung (24) auf die betreffende Stelle (28) des Wäschestücks (10), vorzugsweise im Freiraum zwischen benachbarten Klammermäulern (30), direkt auftreffen und/oder diese messen kann.

## Claims

1. A method for the transport and/or spreading out of laundry items (10) hanging from clamps, wherein a region of a respective laundry item (10) is inserted into a clamp (11) and the laundry item (10) is ascertained, in that it is directly determined by detection of at least one location (28) of the region inserted into the clamp (11) whether the region of the laundry item (10) to be inserted into the respective clamp (11) is present in that clamp **characterized in that** the direct determination by means of noncontact sensing of the at least one location (28) of the region of the laundry item (10) held in the respective clamp (11) occurs through at least one opening (38) in the form of a window of the clamp (11).

2. The method according to Claim 1, **characterized in that** it is ascertained, by the noncontact sensing of the region of the laundry item (10) to be inserted into the clamp (11), whether this region of the laundry item (10) is present in the correct position in the clamp (11), preferably whether it has been inserted far enough into the clamp (11),

3. The method according to Claim 1 or 2, **characterized in that** in the case of clamps (11) with several clamping jaws (30) placed alongside each other and serving for the joint holding of the region of the laundry item (10) to be inserted into the clamp (11), the location (28) of the region of the laundry item (10) held between two neighbouring clamping jaws (30) and which is to be inserted into the clamp (11) is sensed in a noncontact manner.

4. The method according to one of the preceding claims, **characterized in that** the region of the laundry item (10) held in the clamp (11) is directly determined by a noncontact optical and/or acoustic sensing of the at least one location (28) of the region of the laundry item (10) to be inserted into the clamp (11).

5. The method according to Claim 4, **characterized in that** the noncontact sensing of the at least one location (28) of the region of the laundry item (10) held in the respective clamp (11) is done by reflection of light and/or sound, especially light beams and/or sound pulses or sound signals.

6. A device for the transport and/or spreading out of laundry items (10) hanging from clamps (11), with at least one clamp (11) serving for the holding of a region of a laundry item (10) on a conveyor (16) for the movement of the at least one clamp (11) and with at least one detection device (24) ascertaining the presence of the laundry item (10), wherein the detection device (24) is designed to directly ascertain by noncontact sensing the presence of the region of the laundry item (10) in the clamp (11) and to generate at least one preferably optical and/or acoustical signal path (29), **characterized in that** the clamps (11) have at least one opening (38) in the form of a window for the passage of the at least one signal path (29) of the detection device (24).

7. The device according to Claim 6, **characterized in that** the detection device (24) and/or the at least one optical and/or acoustical signal path (29) of the detection device (24) is aimed directly at least at one location (28) of the region of the laundry item (10) situated in the clamp (11).

8. The device according to Claim 6 or 7, **characterized in that** the detection device (24) is arranged stationary at the conveyor (16), preferably on a stationary part of the conveyor (16).

9. The device according to one of Claims 6 to 8, **characterized in that** the clamp (11) comprises a preferably single clamping jaw (30) for the grasping and/or holding of the region of the laundry item (10) and the presence of the region of the laundry item (10) in this clamping jaw (30) can be ascertained by the detection device (24) through a direct noncontact determination of a location (28) of the region of the laundry item (10) held in the clamping jaw (30) or in proximity to it.

10. The device according to one of Claims 6 to 8, **characterized in that** the clamp (11) has at least two clamping jaws (30) placed alongside each other with a spacing, especially being designed as a double clamp, wherein the at least one detection device (24) can directly sense in a noncontact manner a location (28) situated between the neighbouring clamping jaws (30), especially a free space (28), of the region of the laundry item (10) held by the at least two clamping jaws (30).

11. The device according to one of Claims 6 to 10, **characterized in that** the at least one opening (38) in the form of a window is arranged in the respective clamp (11) such that the at least one location (28) of the laundry item (10) being detected can be detected by the detection device (24), preferably the at least one signal path (29) of the detection device (24) can impinge directly on the respective location (28) of the laundry item (10), preferably in the free space between neighbouring clamping jaws (30), and/or can measure this.

## Revendications

1. Procédé de transport et/ou d'étalage de linges (10) accrochés à des pinces, une zone d'un linge respectif (10) étant insérée dans une pince (11) et le linge (10) étant contrôlé, par détection directe d'au moins un emplacement (28) de la zone insérée dans la pince (11), pour savoir si la zone du linge (10) à insérer dans la pince respective (11) se trouve dans celle-ci, **caractérisé en ce que** le contrôle direct par balayage sans contact de l'au moins un emplacement (28) de la zone du linge (10) qui est maintenue dans la pince respective (11) est effectué par au moins une ouverture (38) en forme de fenêtre de la pince (11).

2. Procédé selon la revendication 1, **caractérisé en ce que** le balayage sans contact de la zone du linge (10) à insérer dans la pince (11) permet de déterminer si cette zone du linge (10) se trouve dans la bonne position dans la pince (11), de préférence a été insérée suffisamment loin dans la pince (11).

3. Procédé selon la revendication 1 ou 2, **caractérisé en ce que**, dans le cas de pinces (11) pourvues de plusieurs mâchoires de pince adjacentes (30.) qui servent à recevoir la zone du linge (10) à insérer dans la pince (11), l'emplacement (28), maintenu entre deux mâchoires de pince adjacentes (30), de la zone du linge (10) à insérer dans la pince (11) est balayé sans contact.

4. Procédé selon l'une des revendications précédentes, **caractérisé en ce que** la zone du linge (10), maintenue dans la pince (11), est déterminée directement par un balayage optique et/ou acoustique sans contact de l'au moins un emplacement (28) de la zone du linge (10) à insérer dans la pince (11).

5. Procédé selon la revendication 4, **caractérisé en ce que** le balayage sans contact de l'au moins un emplacement (28) de la zone du linge (10), maintenue dans la pince respective (11), est effectué par une réflexion de lumière et/ou de son, notamment de rayons lumineux et/ou d'impulsions sonores ou de signaux sonores.

6. Dispositif de transport et/ou d'étalage de linges (10) accrochés à des pinces (11), le dispositif comprenant au moins une pince (11), qui sert à maintenir une zone d'un linge (10) sur un convoyeur (16) destiné à déplacer au moins une pince (11), et au moins un moyen de détection (24) qui détermine la présence du linge (10), le moyen de détection (24) étant conçu pour déterminer directement, par balayage sans contact, la présence de la zone du linge (10) dans la pince (11) et pour générer au moins une voie de signal de préférence optique et/ou acoustique (29), **caractérisé en ce que** les pinces (11) comportent au moins un passage (38) en forme de fenêtre destiné à faire passer l'au moins une voie de signal (29) du moyen de détection (24).

7. Dispositif selon la revendication 6, **caractérisé en ce que** le moyen de détection (24) et/ou l'au moins une voie de signal optique et/ou acoustique (29) du moyen de détection (24) sont dirigés directement sur au moins un emplacement (28) de la zone du linge (10) qui se trouve dans la pince (11).

8. Dispositif selon la revendication 6 ou 7, **caractérisé en ce que** le moyen de détection (24) est disposé de manière fixe sur le convoyeur (16), de préférence sur une partie fixe du convoyeur (16).

9. Dispositif selon l'une des revendications 6 à 8, **caractérisé en ce que** la pince (11) comporte de préférence une seule mâchoire de pince (30) destinée à saisir et/ou maintenir la zone du linge (10) et la présence de la zone du linge (10) dans cette mâchoire de pince (30) peut être déterminée par le moyen de détection (24) par détermination directe sans contact d'un emplacement (28), se trouvant dans la mâchoire de pince ou à proximité de celle-ci, de la zone du linge (10), maintenue dans la pince (11).

10. Dispositif selon l'une des revendications 6 à 8, **caractérisé en ce que** la pince (11) comporte au moins deux mâchoires de pince (30) placées à distance l'une de l'autre, notamment réalisées sous la forme d'une double pince, l'au moins un moyen de détection (24) balayant sans contact un emplacement (28), en particulier un emplacement libre (28), situé entre les mâchoires de pince adjacentes (30), de la zone du linge (10) maintenue par les au moins deux mâchoires de pince (30) .

11. Dispositif selon l'une des revendications 6 à 10, **caractérisé en ce que** l'au moins un passage (38) en forme de fenêtre est ménagé dans la pince respective (11) de telle sorte que l'au moins un emplacement à détecter (28) du linge (10) puisse être détecté par le moyen de détection (24), de préférence l'au moins une voie de signal (29) du moyen de détection (24) étant directement incidente audit emplacement (28) du linge (10), de préférence dans l'espace libre entre les mâchoires de pince adjacentes (30) et/ou pouvant mesurer celui-ci.
